# EUROPEAN PATENT SPECIFICATION

(11) **EP 3 528 449 B1**
(45) Date of publication and mention of the grant of the patent: **05.10.2022**
(21) Application number: 18157115.9
(22) Date of filing: 16.02.2018
(51) Int. Cl.: H04L 9/40, H04W 4/02, H04W 12/08

(54) **ELECTRONIC DEVICES, SYSTEMS AND METHODS FOR VEHICULAR COMMUNICATION**
ELEKTRONISCHE VORRICHTUNGEN, SYSTEME UND VERFAHREN ZUR FAHRZEUGKOMMUNIKATION
DISPOSITIFS, SYSTÈMES ET PROCÉDÉS ÉLECTRONIQUES DE COMMUNICATION VÉHICULAIRE

(43) Date of publication of application: 21.08.2019
(73) Proprietor: Sony Group Corporation, Tokyo 108-0075 (JP)
(72) Inventor: CRONIE, Harm, 1015 Lausanne (CH); NOLAN, Julian, 1015 Lausanne (CH); KOIKE, Makoto, Tokyo 108-0075 (JP)
(74) Representative: MFG Patentanwälte Meyer-Wildhagen Meggle-Freund Gerhard PartG mbB

(56) References cited:
- CN-A- 107 508 859
- US-A1- 2017 017 955
- US-A1- 2017 178 417
- US-A1- 2017 346 637
- KAI LIU ET AL: "RSU-based real-time data access in dynamic vehicular networks", INTELLIGENT TRANSPORTATION SYSTEMS (ITSC), 2010 13TH INTERNATIONAL IEEE CONFERENCE ON, IEEE, PISCATAWAY, NJ, USA, 19 September 2010 (2010-09-19), pages 1051-1056, XP031792717, ISBN: 978-1-4244-7657-2

## Description

### TECHNICAL FIELD

The present disclosure generally pertains to the field of vehicular communication, in particular to an electronic device, a system and a method for vehicular communication.

### TECHNICAL BACKGROUND

Vehicular communication (also called car-to-car communication or vehicle-to-vehicle communication) relates to networks in which vehicles and roadside units are the communicating nodes, providing each other with information, such as safety warnings and traffic information. They can be effective in avoiding accidents and traffic congestion.

Vehicular Ad Hoc Networks (VANETs) are created by applying the principles of Mobile Ad Hoc Networks (MANETs) - the spontaneous creation of a wireless network for data exchange - to the domain of vehicles. Vehicular Ad Hoc Networks are a key component of intelligent transportation systems (ITS).

In Intelligent Vehicular Ad Hoc Networks (InVANET) or intelligent transportation systems (ITS), vehicles are enabled to communicate among themselves (vehicle-to-vehicle, V2V) and via roadside access points (vehicle-to-roadside, V2R) also called Road Side Units (RSUs).

Vehicular communication can contribute to safer and more efficient roads by providing timely information to drivers, and also to make travel more convenient. Vehicular communication also contributes to autonomous and semi-autonomous vehicles.

Although there exist techniques for vehicle communication, it is generally desirable to provide more developed techniques for vehicle communication. Lie K. et al, "RSU-based Real-time Data Access in Dynamic Vehicular Networks" discloses a method for data dissemination in vehicular networks supported by RCUs.

Patent literature US 2017/178417 A1 discloses a method, a computer program product, and a computer system for monitoring and enforcing an automated fee payment in an infrastructure.

Patent literature US 2017/346637 A1 discloses an electronic apparatus, a method for an electronic apparatus and an information processing system are provided. The electronic apparatus includes a processing circuit configured to: generate a request to be confirmed which is to be sent to other nodes in a network, the request to be confirmed including an electronic signature of the present node; acquire responses to the request to be confirmed which are from the other nodes, the response including an electronic signature of a corresponding node; and generate, based on the request to be confirmed, the acquired response and an existing block chain, a new block

Patent literature CN 107 508 859 A discloses a vehicle communication method based on a blockchain technology in a vehicular ad hoc network.

### SUMMARY

The invention is defined in the appended independent claims.

According to a first aspect the disclosure provides an electronic device that is configured as a host of a distributed ledger, the permission to access the distributed ledger being location based.

According to a further aspect the disclosure provides a system comprising nodes that are configured as hosts of a distributed ledger, the permission to access the distributed ledger being location based.

According to a further aspect the disclosure provides a method of providing a distributed ledger, the permission to access the distributed ledger being location based.

Further aspects are set forth in the dependent claims, the following description and the drawings.

### BRIEF DESCRIPTION OF THE DRAWINGS

Embodiments are explained by way of example with respect to the accompanying drawings, in which:
Fig. 1 describes an exemplifying situation in which two autonomous vehicles interact with a road side unit via vehicular communication to receive rules concerning their next actions;
Fig. 2 describes a further exemplifying situation in which an autonomous vehicle interacts with a road side unit via vehicular communication to receive rules concerning the vehicle's next actions;
Fig. 3 shows an example of Vehicle Ad Hoc Peer-to-Peer Networks that is controlled by a road side unit;
Fig. 4 schematically describes an example wherein, in a merging area of a road vehicles in a certain area get a rule on a smart contract and make a consensus of their behavior in a second area;
Fig. 5 schematically describes a method of providing a location based distributed ledger in the exemplifying scenario of Fig. 6;
Fig. 6 schematically describes an alternative method of providing a location based distributed ledger in the exemplifying scenario of Fig. 6;
Fig. 7 schematically describes an embodiment of an electronic device that may be used in context of the embodiments; and
Fig. 8 schematically describes a further use case in which the vehicles are delivery drones.

### DETAILED DESCRIPTION OF EMBODIMENTS

The embodiments disclose an electronic device that is configured as a host of a distributed ledger, the permission to access the distributed ledger being location based. A distributed ledger is a type of database that is spread across multiple sites. According to some embodiments, records are stored one after the other in a distributed ledger when the participants of the ledger reach consensus. A distributed ledger may for example store rules for making a consensus of autonomous vehicles' behaviors in a certain geographical area such as a motorway junctions and intersections. A distributed ledger may be used to allow for distributed transaction processing.

The electronic device may for example be a node of a network that hosts a distributed ledger. A node of the distributed ledger may store a full copy of the database, or it may store only parts of the database.

The electronic device may for example be integrated in a road side unit. A road side unit may be located at the side of a road and control a defined section of the road, or it may be located near a crossing, or the like.

The road side unit may have geographical information indicating the types and parameters of the actual place near the road side unit such as 200 meters before a motorway junction that has two lanes, junction from right side lane and 100 meters acceleration lane from the junction point. In particular, the electronic device may be a server that is located, together with other servers, along a road.

The distributed ledger may be a shared ledger. A shared ledger refers to any database and application that is shared by a group of participants, or that is open to the public. A shared ledger may use a distributed ledger as its underlying database.

The electronic device may for example be a node of a Vehicular Ad Hoc Network. A Vehicular Ad Hoc Network can use any wireless networking technology as its basis. The most prominent are short range radio technologies like WLAN (either standard Wi-Fi or the vehicle-specific IEEE 802.11p), Bluetooth, Visible Light Communication (VLC), Infrared, and ZigBee. In addition, cellular technologies like UMTS, LTE, or WiMAX IEEE 802.16 can support VANETs, forming heterogeneous vehicular networks.

Permission of read access to the distributed ledger may depend on location. For example, the permission to access the distributed ledger may depend on physical closeness. For example, a vehicle group can be defined as a group of vehicles that are within a certain distance from the electronic device storing the distributed ledger. Such a group of vehicles that are within a certain distance may proceed the read access to the distributed ledger. The location based permission may be limited to read access. The distributed ledger may be updated remotely through a network.

Alternatively, a vehicle may also be assigned to a group based on its distance to a road side unit. For instance, a vehicle may be assigned to group A if its closest road side unit is road side unit A.

Physical closeness may be verified by sensors and/or communications via short range radio technologies between a vehicle and an electronic device storing the distributed ledger. For example, the devices at a location may verify each other's physical closeness by means of radio communication (Vehicular Ad Hoc Network, WLAN), cameras (CCD, TOF etc.), and the like.

According to an embodiment, one or more vehicles provide information about the current driving and/or the future plan of driving such as the situation to follow the vehicle in front under a certain speed limit to the road side unit and the road side unit determines a behavior direction for the next actions of the one or more vehicles based on this information and rules stored on the distributed ledger on the road side unit. The one or more vehicles may then confirm the behavior direction for the next actions. The road side unit may then store the result of the behavior direction and utilize the stored the precedent vehicles' behaviors as additional information for determining next behavior direction on the time base. The rules may be stored as smart contracts in the distributed ledger and each of the electronic devices has geographical information indicating the type of the actual place near the electronic device. The geographical information is used for selecting a rule from the set of rules stored on the electronic device. In the case that the rule is stored as smart contract, the geographical information and received information from the one or more vehicles may be input to the smart contract to get the behavior direction for the next actions of the one or more vehicles. The precedent vehicles' behaviors may be an additional input to the smart contract.

In another embodiment, one or more vehicles provide information about the current driving and/or the future plan of driving such as the situation to follow the vehicle in front under a certain speed limit to the road side unit and the road side unit provides rules stored on the distributed ledger on the road side unit along with the received information to each of the one or more vehicles. Then, each of the one or more vehicles may determine the behavior for the next actions based on the information and the rules. The one or more vehicles may transmit the own behavior to other vehicles by means of radio communication. Each of the electronic devices has geographical information indicating the place type of the electronic device and the rules provided from the road side unit may be selected from a set of rules based on the geographical information.

According to some embodiments, the distributed ledger is designed as a block chain. A block chain is a type of database that takes a number of records and puts them in a block. Each block is then linked to the next block, using, e.g. a cryptographic signature. This allows block chains to be used like a ledger, which can be shared and corroborated by anyone with the appropriate permissions.

The distributed ledger may be open to the public or may layer on permissions for different types of users. For example, police cars and ambulance cars may have higher permissions than private cars.

The distributed ledger may be a private permissioned ledger for a location. Permissioned ledgers may have one or many owners. When a new record is added, the ledger's integrity may be checked by a limited consensus process. This may be carried out by trusted actors - government departments, for example traffic authorities, police or the like. A permissioned block chain may provide highly-verifiable data sets because the consensus process creates a digital signature, which can be seen by all parties.

A distributed ledger may store vehicular communication data, in particular consensus information related to actions and behavior of vehicles. For example, a group of vehicles achieves consensus on their actions on the road. For this purpose, consensus may be achieved on the actions to be taken.

There are many ways to corroborate the accuracy of a ledger, but they are broadly known as consensus (the term 'mining' is used for a variant of this process in the cryptocurrency Bitcoin). The embodiments may use any of the known consensus techniques, for example a mining process. The length of longest chain may determine the ledger state. Still further, a Practical Byzantine Fault tolerance consensus protocol may be used as consensus mechanism.

The mechanism holding rules for making a consensus of autonomous vehicles' behaviors in a certain geographical area on distributed ledger has several advantages. For example, government authority and the likes can easily control and renew unified rules. Furthermore, when the distributed ledger is designed as a block chain and the rules are described as smart contracts, the rules for determining autonomous vehicle's behavior direction in a certain area may be secured while having the advantages of a blockchain (e.g. transparency and immutability). Furthermore, the mechanism to permit a read access to the distributed ledger ,based on the physical distance between the electronic device storing the distributed ledger and vehicles, contributes to the secure data access control to the distributed ledger. According to some embodiments, the vehicles receive a basic rule for their behavior and they determine actual behaviors based on the basic rule by communicating with other vehicles in the area.

The rules stored by the distributed ledger may comprise a smart contract which is a kind of script program outputting vehicles' behavior direction to transmit vehicles near the electronic device storing the distributed ledger. The smart contract may have a set of rules for different geographical types. The input to the smart contract may include geographical type information stored on the electronic device, which may be used for selection of appropriate rule. The input to the smart contract may include received information from one or more vehicles near the electronic device or the preceding vehicles' behavior information stored on the electronic device having the distributed ledger. Smart contracts are contracts whose terms are recorded in a computer language instead of legal language. According to embodiments, smart contracts can be automatically executed by a computing system. By means of a location based distributed ledger, the electronic device may for example provide a behavioral direction for automated vehicles by using smart contracts stored in the distributed ledger which is accessible in a certain distance. Consensus, directions or confirmation results of the directions from the automated vehicles may be recorded into the electronic device. For example, in a merging area of a road, the vehicles in a certain area may get a direction based on a rule on smart contract and make a consensus of their behavior in the area or make a decision of their behaviors in the area based on the direction.

Still further, an ambulance vehicle may broadcast or inform an approach to a certain area to the electronic device. Then the electronic device may select a rule to make a priority on the ambulance vehicle and provide a behavior direction of vehicles near the area based on the rule.

The electronic device may record geographical information, previous behavior directions, and/or feedback on the execution of the directions. Such feedback or directions may be used to assign priorities for future actions taken by vehicles. For instance, when a vehicle has not been able to execute the actions based on the received behavior direction, the vehicle may be given a lower priority for future actions. Another option is that the vehicle owner pays a fine. The vehicle may receive and store the fine information on a storage associated with the vehicle. In another case, the electronic device may collect the actual behavior result by sensors or report from the vehicle and transmit the vehicle identification information and the fact that the vehicle did not follow the behavior direction to a server.

The smart contracts itself may include computer code that is used to output behavior directions based on inputted information such as the vehicles' situation in a certain area, geographical information stored on the electronic device, and/or previous behavior directions.

The embodiments also disclose a system comprising nodes that are configured as hosts of a distributed ledger, the permission of a read access to the distributed ledger being location based. The nodes may for example be nodes of one or more Vehicular Ad Hoc Networks. Still further, in another embodiment that each autonomous vehicle may have a distributed ledger, for each relevant location, a different P2P network may be dynamically created. In that scenario, the records of ledgers are not the same. Nodes of the system may join a process of making a consensus about the behaviors of the vehicles for each of the different locations. The vehicles may update the own distributed ledger to store the past behavior information, which may be different use case of the ledger from the road side unit storing behavior related rules as smart contracts on its own distributed ledger.

The architecture of the distributed ledger may scale up. However, the distributed ledger can also be used in a scenario where one or multiple nodes are central servers. A central server may for example store all the local records which may store on a distributed ledger of an electronic device as a road side unit and transmit to the central server.

The embodiments also disclose a method of providing a distributed ledger, the permission or a read access to the distributed ledger being location based.

Permission to access the distributed ledger may for example depend on physical closeness. For example, when a group of vehicles is in a certain area, a nearest road side unit may cognize the vehicles by sensors and/or communications via short range radio technologies between a vehicle and the road side unit storing the distributed ledger. The road side unit may determine whether the vehicles are enough close to the road side unit. If one or more vehicles are in a certain area, in another word enough close to the road side unit, the road side unit may access to a smart contract associated with the ledger and may share the output of the smart contract with the one or more vehicles. In such way all vehicles in a certain area may know the actions to be performed in an efficient. The smart contracts may be prepared and stored rules of autonomous vehicles' behaviors for several types of geographical information such as motorway junctions and merging area of roads. The smart contract on the distributed ledger of road side units may be managed and updated by government authority and the like.

The embodiments disclosed herein may also be used for fleet management of some vehicles, e.g. for fleet management of delivery drones, e.g. unmanned aerial vehicles (UAV) utilized to transport packages, food or other goods.

An additional use for a location based distributed ledger is envisioned for shops and shopping malls. A location based distributed ledger can be set up which is permissioned for shops in e.g. a shopping mall. Users may access the distributed ledger once they are close to the shopping mall. With access to the ledger users can directly buy and pay for products. Furthermore, advertising for products and corresponding discounts may be published on the block chain in the form of smart contracts. A user may also use a second distributed ledger, and assets may be transferred from this ledger to the location based distributed ledger. This is useful to pay for instance for products that are advertised on the location based ledger. Smart contracts can handle the interaction between these ledgers through the user that has received permission to access the location based distributed ledger.

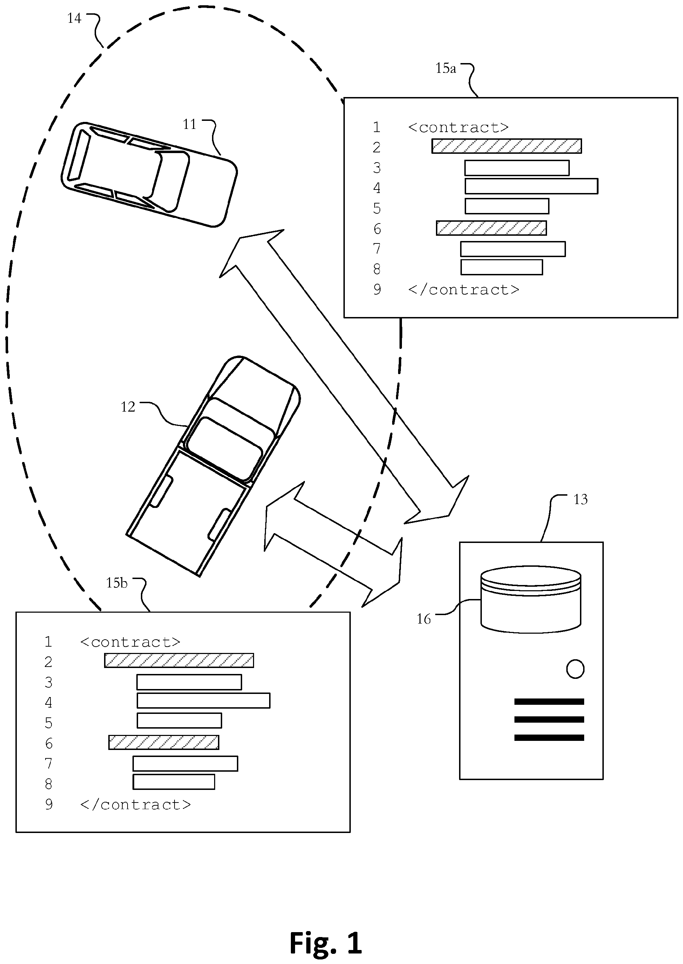

Fig. 1 describes an exemplifying situation in which two autonomous vehicles 11, 12 interact with a road side unit 13 via vehicular communication to find behavior directions concerning their next actions. The two autonomous vehicles 11, 12 meet each other at a location that is controlled by road side unit 13. The two vehicles 11, 12, when they are within the communication range of road side unit 13, form a location based group of vehicles 14. The two autonomous vehicles 11, 12 communicate driving parameters such as their individual velocity and position to the road side unit 13. Based on these parameters and rules stored on the road side unit, the road side unit provides behavior directions to the two autonomous vehicles 11, 12. For example, road side unit 13 may decide that the faster vehicle has priority over the slower vehicle, i.e. that the slower vehicle will slow down to give the faster vehicle priority. The autonomous vehicles 11, 12 confirm their respective instructed next actions by providing their confirmation concerning their respective instructed next actions and they transmit these to road side unit 13 that stores on a memory different from a distributed ledger storing rules for behavior direction determination as smart contracts 15a, 15b in the distributed ledger 16. The rules for behavior direction determination of smart contracts 15a, 15b are prepared for different geographic situations respectively. The road side unit 13 has geographic information nearby and uses the geographic information to determine which rule should be used. In order to increase driving safety, the two autonomous vchiclcs 11, 12 may communicatc with cach other via vehicular communication. However, in the embodiment of Fig. 1 the road side unit 13 provides the behavior directions for the two autonomous vehicles 11, 12, i.e. the two autonomous vehicles 11, 12 do not need to find a consensus for their actions between each other. In addition to information obtained from the two autonomous vehicles 11, 12, road side unit 13 may base its decisions (rules) on additional information that is obtained e.g. from sensors (cameras, weather condition information, etc.) connected to road side unit 13.

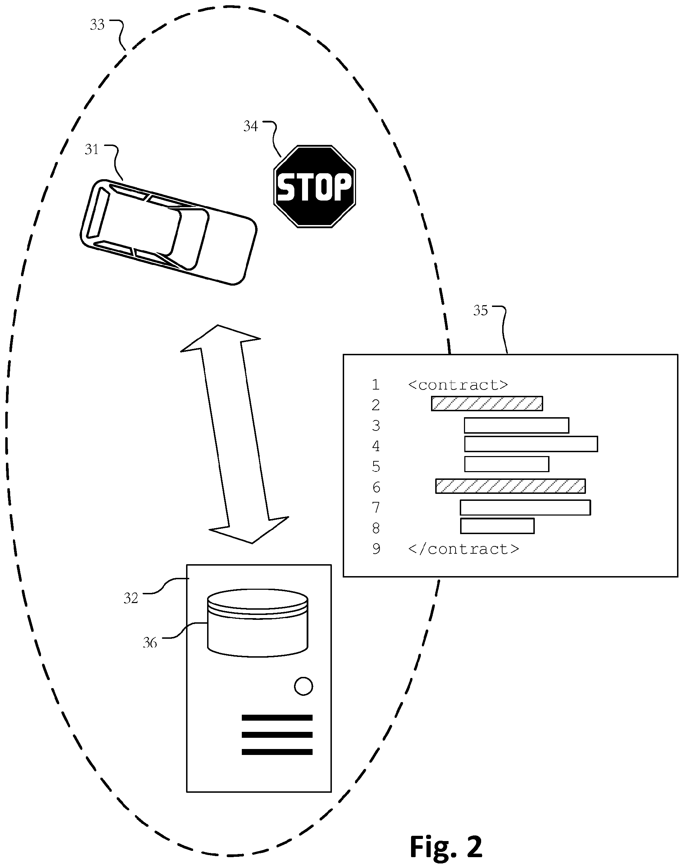

Fig. 2 describes a further exemplifying situation in which an autonomous vehicle 31 interacts with a road side unit 32 via vehicular communication to find behavior direction concerning the vehicle's next actions. The vehicle 31, when it is within the communication range of road side unit 32, is part of a location based group of vehicles 33 that is related to road side unit 32. Road side unit 32 controls a stop sign 34 that is located at a crossing situated within the region controlled by road side unit 32. In order to increase driving safety, the autonomous vehicle 31 communicates with road side unit 32 via vehicular communication. Here, for example, the autonomous vehicle 31 indicates to the road side unit 32 its geographical position and velocity.

Based on this information road side unit 32 decides that the autonomous vehicle 31 must stop at the stop sign 34. Road side unit 32 provides this instruction to autonomous vehicle 31 as a direction based on a rule stored on the road side unit 32 as a smart contract 35. Autonomous vehicle 31 confirms this instructed next action by providing its confirmation concerning this instructed next action to the road side unit 32. Autonomous vehicle 31 and road side unit 32 record this behavior direction and/or the feedback of the direction concerning the vehicle's next action and road side unit 32 stores this behavior direction and/or the feedback of the direction in a memory different from a distributed ledger 36 storing the rules to be used for the behavior direction creation.

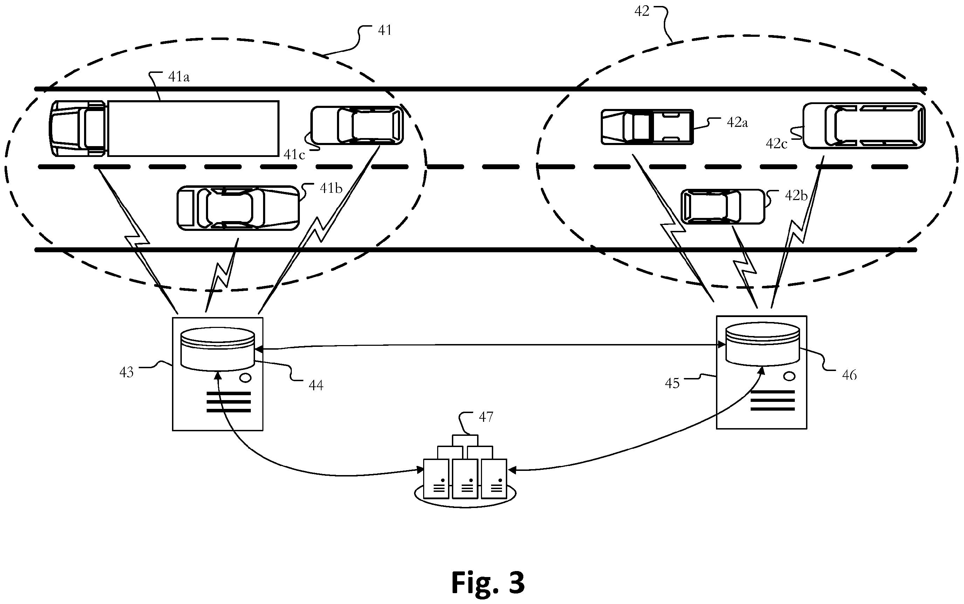

Fig. 3 shows an example of two road side units that are communicatively coupled to close vehicles and a central server. A vehicle group 41 consisting of three vehicles 41a, 41b, and 41c and a vehicle group 42 consisting of three vehicles 42a, 42b, and 42c is shown. Each of these vehicle groups 41, 42 may obtain rules on the next actions to be taken on the road from their respective road side unit 43, 45, and announce the consensus in the form of a smart contract to this road side unit 43, 45. Vehicle group 41 announces the consensus to road side unit 43. Vehicle group 42 announces the consensus to road side unit 45. Road side unit 43 and road side unit 45 are communicatively coupled to each other and share a distributed ledger 44, 46. The permission to access the distributed ledger 44, 46 depends on physical closeness to the respective road side unit. Road side unit 43 and road side unit 45 are communicatively coupled to a central server 47. Central server 47 stores a full copy of the distributed ledger covering all data obtained from all road side units of the complete system, e.g. a full block chain. Road side unit 43 and road side unit 45 need not store a full copy of the distributed ledger.

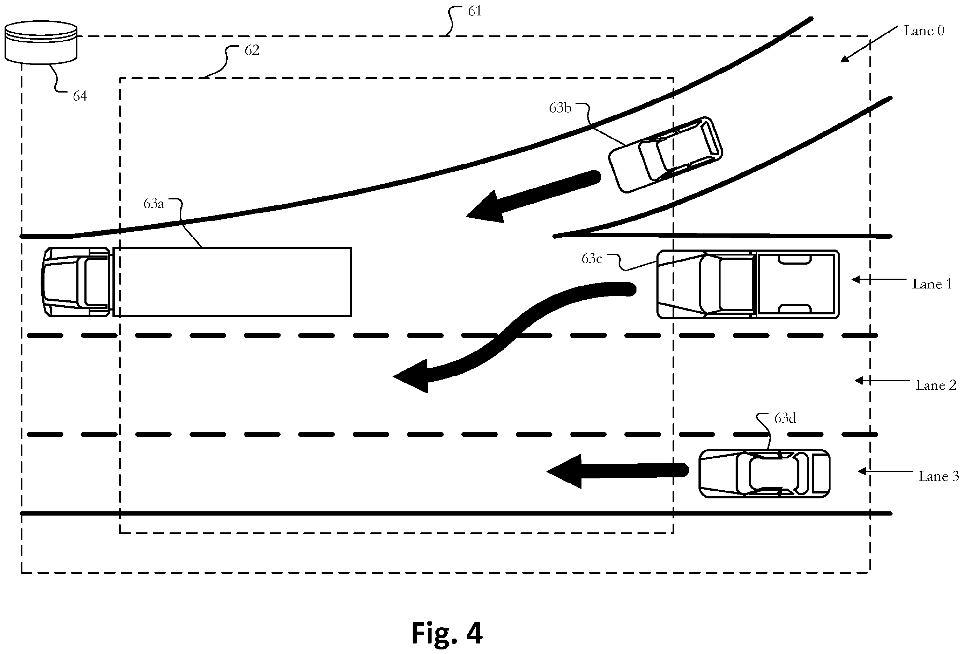

Fig. 4 schematically describes an example wherein, in a merging area of a road, vehicles 63a-d in a certain first area 61 get a rule from road side unit 64 on a smart contract and make a consensus of their behavior in a second area 62. In the merging area of the road, there exist four lanes, lane0, lane1, lane2, and lane3. To make a consensus of their behavior in the second area 62, the road side unit 64 decides, e.g. which of the vehicles 63a-d may enter in the first area 61 within a certain period of time. Still further, the road side unit 64 decides by when the vehicles 63a-d may enter in the second area 62. Still further, the road side unit 64 determines behaviors of each vehicle in the second area 62. In the case of the merging area of road, road side unit 64 is associated with the first area 61 and stores a database that covers the first area 61 or outskirts of the first area 61. This database stores smart contracts to provide the basic rule of the behavior in the second area 62. By means of a smart contract vehicles in the first area 61 must participate in a process to make a consensus about their behaviors in second area. In the second area 62 vehicles have to follow a determined-behavior based on the rules they found in the first area 61. The road side unit 64 has a memory storing geographical information concerning the vehicles (e.g. location of the vehicles, whether or not they are inside the first and/or second area, etc.), smart contracts, and previous consensus results. A smart contract comprises a basic rule of the behavior in the second area 62 and an advanced rule.

An example of a basic rule defines that a) the faster vehicle has a priority, b) that the smaller number lane has a priority (e.g. 15 sec), c) that a vehicle has to change the speed to pass the second area 62 with keeping a certain distance to each other (e.g. 50m), and that d) a vehicle only can change the lane to the upper number lane if necessary.

An example of an advanced rule defines a) an arrangement based on the previous consensus result and b) emergent situations and the retrieval.

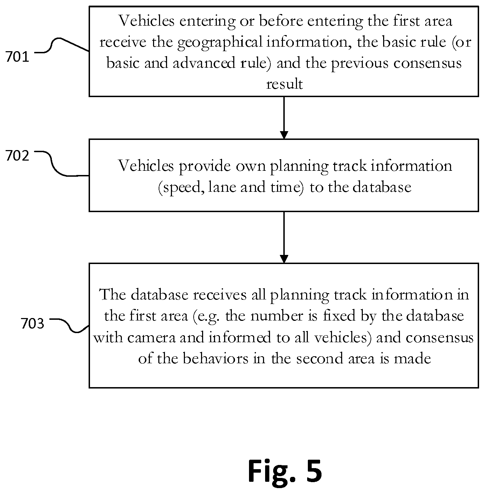

Fig. 5 schematically describes a method of providing a location based distributed ledger in the exemplifying scenario of Fig. 4. At 701, vehicles entering or before entering the first area receive from the road side unit the geographical information, the basic rule (or basic and advanced rule) and the previous consensus result. At 702, the vehicles provide own planning track information (speed, lane and time) to the road side unit. At 703 the road side unit receives all planning track information in the first area (e.g. the number is fixed by the database with a camera and informed to all vehicles) and consensus of the behaviors in the second area is made.

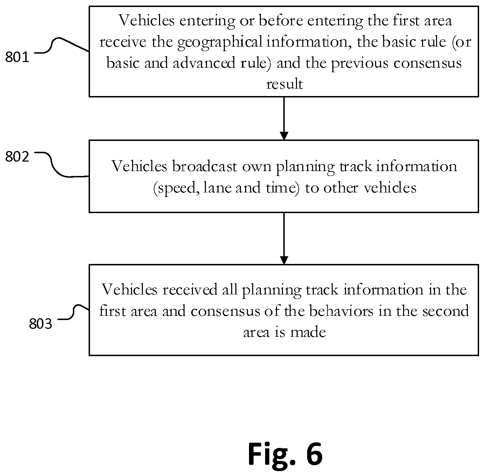

Fig. 6 schematically describes an alternative method of providing a location based distributed ledger in the exemplifying scenario of Fig. 4. At 801, vehicles entering or before entering the first area receive from the road side unit the geographical information, the basic rule (or basic and advanced rule) and the previous consensus result. At 802, the vehicles broadcast own planning track information (speed, lane and time) to all other vehicles. At 803, the vehicles receive all planning track information in the first area 61 (e.g. the number is fixed by the database with a camera and informed to all vehicles) and make a consensus of the behaviors in the second area 62.

A smart contract on the database may be stored on a block chain and may connect to the Private or Consortium type block chain network maintained by a few controllers like an authority and trusted entity, e.g. a traffic authority or a financial institute. Multi-signatures of the controllers are required to change the smart contract.

The geographical information may be updated by a part of the road side unit.

The previous consensus result may be stored in the database with a signature of the database after making a consensus, and may optionally be provided to vehicles entering or before entering in the first area to be used for calculating own planning track information at each vehicle.

All vehicles may have a distributed ledger which is interoperable with the block chain network of the smart contract, or create a distributed ledger with the contract to the database as a turning point.

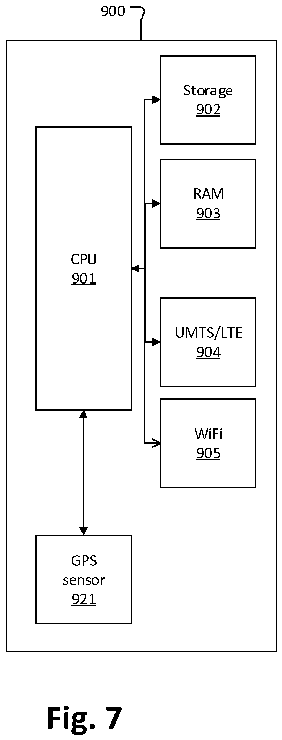

Fig. 7 schematically describes an embodiment of an electronic device 900 that may be used in context of the embodiments. The electronic device 900 comprises a CPU 901 as processor. The electronic device 900 further comprises an UMTS/LTE interface 904 and a WiFi-interface 905. These units 904, 905 act as I/O interfaces for data communication with external devices such as for car-to-car communication or for communication between a car and a road side unit. The electronic device 900 further comprises a GPS sensor 921 for obtaining location information. The electronic device 900 further comprises a data storage 902 (e.g. a hard drive or solid state drive) and a data memory 903 (e.g. a RAM). The data memory 903 is arranged to store or cache data or computer instructions for processing by processor 901. The data storage 902 is arranged as a storage for a distributed ledger.

It should be noted that the description above is only an example configuration. Alternative configurations may be implemented with additional or other sensors, storage devices, interfaces or the like. For example, in alternative embodiments, the processor 901 may also be coupled to further sensors that are used in automated or autonomous driving such as CCD cameras, TOF cameras, or the like.

A road side unit may have a similar structure as that disclosed in Fig. 7. In addition or alternatively to the I/O interfaces 904, 905 in Fig. 9 a server acting as road side unit may also be connected to other road side interfaces or to a central server by means of Ethernet connections. Still further, a road side unit that has a static location must not necessarily include a GPS sensor such as 921 in Fig. 7. The static location of a road side unit may also be preconfigured in the unit.

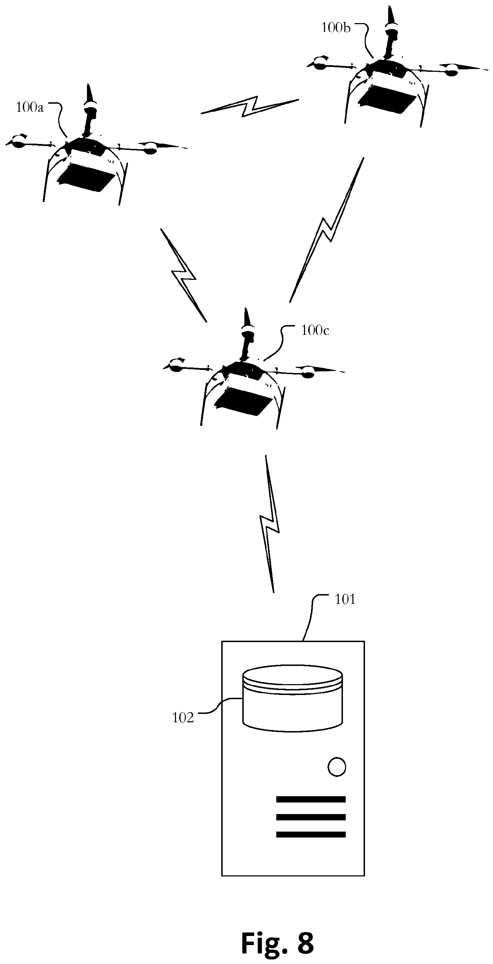

Fig. 8 schematically describes a further use case in which the vehicles are delivery drones. Three delivery drones 100a, 100b, 100c interact via vehicle communication with a distributed ledger server 101. The distributed ledger server 101 obtains information on parameters such as location and position of the delivery drones. Based on this information the distributed ledger server 101 determines rules for the next actions of the delivery drones. The delivery drones find provide their consensus concerning these actions (their flight paths and flight behavior) to distributed ledger server 101. The distributed ledger server 101 may access a distributed ledger, e.g. a block chain. The block chain may be used to record consensus in the form of smart contracts. Still further, the database may be used to record transactions related to actions such as picking up and/or loading off parcels. The delivery drones may form Peer-to-Peer Ad Hoc Networks, or they may interact with ground based units (just as cars interact with road side units) and central servers, or use combinations of these techniques.

A distributed ledger may also be used for fleet management of some vehicles, e.g. for fleet management of delivery drones, e.g. unmanned aerial vehicles (UAV) utilized to transport packages, food or other goods.

It should be recognized that the embodiments describe methods with an exemplary ordering of method steps. The specific ordering of method steps is however given for illustrative purposes only and should not be construed as binding.

It should further be recognized that the division of the electronic device into units (such as exemplified in Fig. 9) is only made for illustration purposes and that the present disclosure is not limited to any specific division of functions in specific units.

In the embodiments described above, a method for controlling an electronic device, such as a digital camera device is described. The method can also be implemented as a computer program causing a computer and/or a processor to perform the method, when being carried out on the computer and/or processor. In some embodiments, also a non-transitory computer-readable recording medium is provided that stores therein a computer program product, which, when executed by a processor, such as the processor described above, causes the method described to be performed.

All units and entities described in this specification and claimed in the appended claims can, if not stated otherwise, be implemented as integrated circuit logic, for example on a chip, and functionality provided by such units and entities can, if not stated otherwise, be implemented by software. For example, CPU 201 of the embodiment of Fig. 7 may be implemented by a respective programmed processor, field programmable gate array (FPGA), or the like.

In so far as the embodiments of the disclosure described above are implemented, at least in part, using a software-controlled data processing apparatus, it will be appreciated that a computer program providing such software control and a transmission, storage or other medium by which such a computer program is provided are envisaged as aspects of the present disclosure.

## Claims

1. An electronic device (13; 32; 43; 45; 64; 900; 101) that is configured as a host of a distributed ledger (16 ;36; 43; 46; 102), the permission to access the distributed ledger (16 ;36; 43; 46; 102) being location based,
wherein the electronic device (13; 32; 43; 45; 64; 900; 101) is integrated into a road side unit (13; 32; 43; 45; 64), wherein one or more vehicles are assigned to the distributed ledger (16 ;36; 43; 46; 102) based on their respective distance to the road side unit,
wherein the one or more vehicles provide information to the road side unit (13; 32; 43; 45; 64) and wherein the road side unit (13; 32; 43; 45; 64) determines rules for the next actions of the one or more vehicles based on this information,
wherein the road side unit (13; 32; 43; 45; 64) provides the rules to the one or more vehicles,
wherein the one or more vehicles confirm the rules for the next actions of the one or more vehicles by providing their consensus to these rules to the road side unit (13; 32; 43; 45; 64),
wherein the road side unit (13; 32; 43; 45; 64) stores this consensus as smart contracts (15a-b; 35) in the distributed ledger (16 ;36; 43; 46; 102).

2. The electronic device (13; 32; 43; 46; 64; 900; 101) of claim 1, wherein the permission to access the distributed ledger (16 ;36; 43; 46; 102) depends on physical closeness.

3. The electronic device (13; 32; 43; 46; 64; 900; 101) of claim 2, wherein the physical closeness is verified by each of the members of a distributed ledger.

4. The electronic device (13; 32; 43; 46; 64; 900; 101) of claim 1, wherein the electronic device (13; 32; 43; 46; 64; 900; 101) is further arranged to contribute to different ledgers as it moves from one location to another.

5. The electronic device (13; 32; 43; 46; 64; 900; 101) of claim 1, wherein the distributed ledger (16 ;36; 43; 46; 102) is designed as a block chain.

6. The electronic device (13; 32; 43; 46; 64; 900; 101) of claim 1, wherein the distributed ledger (16 ;36; 43; 46; 102) is a private permissioned ledger for a location.

7. The electronic device (13; 32; 43; 46; 64; 900; 101) of claim 1, wherein the distributed ledger stores vehicular communication data,
wherein the vehicular communication data stored by the distributed ledger (16 ;36; 43; 46; 102) comprises consensus information.

8. The electronic device (13; 32; 43; 46; 64; 900; 101) of claim 1, wherein a smart contract (15a-b; 35) defines a basic rule for the behavior of a group of vehicles in a defined area.

9. The electronic device (13; 32; 43; 46; 64; 900; 101) of claim 1, wherein the distributed ledger (16 ;36; 43; 46; 102) records geographical information, previous consensus results, and/or feedback on the execution of a smart contract (15a-b; 35).

10. The electronic device (13; 32; 43; 46; 64; 900; 101) of claim 1, wherein a smart contract (15a-b; 35) specifies computer code that is used to verify if the behavior of vehicles in a group of vehicles satisfies actions specified in a smart contract (15a-b; 35).

11. A system comprising nodes that are configured as hosts of a distributed ledger (16 ;36; 43; 46; 102), the permission to access the distributed ledger (16 ;36; 43; 46; 102) being location based, wherein at least one node is configured as electronic device (13; 32; 43; 46; 64; 900; 101) as defined in anyone of claim 1 to 10.

12. A method of providing a distributed ledger (16 ;36; 43; 46; 102), the permission to access the distributed ledger (16 ;36; 43; 46; 102) being location based,
one or more vehicles being assigned to the distributed ledger (16; 36; 43; 46; 102) based on their respective distance to a road side unit (13; 32; 43; 45; 64) in which the distributed ledger (16; 36; 43; 46; 102) is integrated,
the one or more vehicles providing information to the road side unit (13; 32; 43; 45; 64) and
the road side unit (13; 32; 43; 45; 64) determining rules for the next actions of the one or more vehicles based on this information,
the road side unit (13; 32; 43; 45; 64) provides the rules to the one or more vehicles,
the one or more vehicles confirming the rules for the next actions of the one or more vehicles by providing their consensus to these rules to the road side unit (13; 32; 43; 45; 64),
the road side unit (13; 32; 43; 45; 64) storing this consensus as smart contracts (15a-b; 35) in the distributed ledger (16 ;36; 43; 46; 102).

## Patentansprüche

1. Elektronische Vorrichtung (13; 32; 43; 45; 64; 900; 101), die als ein Host eines Distributed-Ledgers (16; 36; 43; 46; 102) ausgelegt ist, wobei die Erlaubnis, auf den Distributed-Ledger (16; 36; 43; 46; 102) zuzugreifen, ortsbezogen ist,
wobei die elektronische Vorrichtung (13; 32; 43; 45; 64; 900; 101) in eine Straßenrandeinheit (13; 32; 43; 45; 64) integriert ist, wobei ein oder mehrere Fahrzeuge dem Distributed-Ledger (16; 36; 43; 46; 102) auf Grundlage ihrer jeweiligen Entfernung zu der Straßenrandeinheit zugewiesen werden,
wobei das eine oder die mehreren Fahrzeuge der Straßenrandeinheit (13; 32; 43; 45; 64) Information bereitstellen und wobei die Straßenrandeinheit (13; 32; 43; 45; 64) auf Grundlage dieser Information Regeln für die nächsten Aktionen des einen oder der mehreren Fahrzeuge bestimmt,
wobei die Straßenrandeinheit (13; 32; 43; 45; 64) die Regeln dem einen oder den mehreren Fahrzeugen bereitstellt,
wobei das eine oder die mehreren Fahrzeuge die Regeln für die nächsten Aktionen des einen oder der mehreren Fahrzeuge durch Bereitstellen ihrer Übereinkunft zu diesen Regeln an die Straßenrandeinheit (13; 32; 43; 45; 64) bestätigen,
wobei die Straßenrandeinheit (13; 32; 43; 45; 64) diese Übereinkunft als "Smart Contracts" (15a-b; 35) in dem Distributed-Ledger (16; 36; 43; 46; 102) speichert.

2. Elektronische Vorrichtung (13; 32; 43; 46; 64; 900; 101) nach Anspruch 1, wobei die Erlaubnis, auf den Distributed-Ledger (16; 36; 43; 46; 102) zuzugreifen, von physischer Nähe abhängt.

3. Elektronische Vorrichtung (13; 32; 43; 46; 64; 900; 101) nach Anspruch 2, wobei die physische Nähe von jedem der Mitglieder eines Distributed-Ledgers überprüft wird.

4. Elektronische Vorrichtung (13; 32; 43; 46; 64; 900; 101) nach Anspruch 1, wobei die elektronische Vorrichtung (13; 32; 43; 46; 64; 900; 101) ferner dazu eingerichtet ist, zu verschiedenen Ledgern beizutragen, wenn sie sich von einem Ort zu einem anderen bewegt.

5. Elektronische Vorrichtung (13; 32; 43; 46; 64; 900; 101) nach Anspruch 1, wobei der Distributed-Ledger (16; 36; 43; 46; 102) als eine Blockchain konzipiert ist.

6. Elektronische Vorrichtung (13; 32; 43; 46; 64; 900; 101) nach Anspruch 1, wobei der Distributed-Ledger (16; 36; 43; 46; 102) ein Ledger privater Erlaubnis für einen Ort ist.

7. Elektronische Vorrichtung (13; 32; 43; 46; 64; 900; 101) nach Anspruch 1, wobei der Distributed-Ledger Fahrzeugkommunikationsdaten speichert,
wobei die Fahrzeugkommunikationsdaten, die von dem Distributed-Ledger (16; 36; 43; 46; 102) gespeichert werden, Übereinkunftinformation umfasst.

8. Elektronische Vorrichtung (13; 32; 43; 46; 64; 900; 101) nach Anspruch 1, wobei ein "Smart Contract" (15a-b; 35) eine Grundregel für das Verhalten einer Gruppe von Fahrzeugen in einem definierten Gebiet definiert.

9. Elektronische Vorrichtung (13; 32; 43; 46; 64; 900; 101) nach Anspruch 1, wobei der Distributed-Ledger (16; 36; 43; 46; 102) geografische Information, vorherige Übereinkunftergebnisse und/oder Rückmeldung zu der Ausführung eines "Smart Contracts" (15a-b; 35) aufzeichnet.

10. Elektronische Vorrichtung (13; 32; 43; 46; 64; 900; 101) nach Anspruch 1, wobei ein "Smart Contract" (15a-b; 35) Computercode spezifiziert, der dafür verwendet wird zu überprüfen, ob das Verhalten von Fahrzeugen in einer Gruppe von Fahrzeugen den Aktionen entspricht, die in einem "Smart Contract" (15a-b; 35) spezifiziert sind.

11. System, das Knoten aufweist, die als Hosts eines Distributed-Ledgers (16; 36; 43; 46; 102) ausgelegt sind, wobei die Erlaubnis, auf den Distributed-Ledger (16; 36; 43; 46; 102) zuzugreifen, ortsbezogen ist, wobei mindestens ein Knoten als elektronische Vorrichtung (13; 32; 43; 46; 64; 900; 101) nach einem von Anspruch 1 bis 10 ausgelegt ist.

12. Verfahren zum Bereitstellen eines Distributed-Ledgers (16; 36; 43; 46; 102), wobei die Erlaubnis, auf den Distributed-Ledger (16; 36; 43; 46; 102) zuzugreifen, ortsbezogen ist,
wobei ein oder mehrere Fahrzeuge dem Distributed-Ledger (16; 36; 43; 46; 102) auf Grundlage ihrer jeweiligen Entfernung zu einer Straßenrandeinheit (13; 32; 43; 45; 64), in die der Distributed-Ledger (16; 36; 43; 46; 102) integriert ist, zugewiesen werden,
wobei das eine oder die mehreren Fahrzeuge der Straßenrandeinheit (13; 32; 43; 45; 64) Information bereitstellen und die Straßenrandeinheit (13; 32; 43; 45; 64) auf Grundlage dieser Information Regeln für die nächsten Aktionen des einen oder der mehreren Fahrzeuge bestimmt, wobei die Straßenrandeinheit (13; 32; 43; 45; 64) dem einen oder den mehreren Fahrzeugen die Regeln bereitstellt,
wobei das eine oder die mehreren Fahrzeuge die Regeln für die nächsten Aktionen des einen oder der mehreren Fahrzeuge durch Bereitstellen ihrer Übereinkunft zu diesen Regeln an die Straßenrandeinheit (13; 32; 43; 45; 64) bestätigen,
wobei die Straßenrandeinheit (13; 32; 43; 45; 64) diese Übereinkunft als "Smart Contracts" (15a-b; 35) in dem Distributed-Ledger (16; 36; 43; 46; 102) speichert.

## Revendications

1. Dispositif électronique (13 ; 32 ; 43 ; 45 ; 64 ; 900 ; 101) qui est configuré comme un hôte d'un grand livre distribué (16 ; 36 ; 43 ; 46 ; 102), la permission d'accéder au grand livre distribué (16 ; 36 ; 43 ; 46 ; 102) étant basée sur la localisation,
le dispositif électronique (13 ; 32 ; 43 ; 45 ; 64 ; 900 ; 101) étant intégré à une unité en bordure de route (13 ; 32 ; 43 ; 45 ; 64), un ou plusieurs véhicules étant assignés au grand livre distribué (16 ; 36 ; 43 ; 46 ; 102) sur la base de leur distance respective jusqu'à l'unité en bordure de route,
les un ou plusieurs véhicules fournissant des informations à l'unité en bordure de route (13 ; 32 ; 43 ; 45 ; 64) et l'unité en bordure de route (13 ; 32 ; 43 ; 45 ; 64) déterminant des règles pour les actions suivantes des un ou plusieurs véhicules sur la base de ces informations,
l'unité en bordure de route (13 ; 32 ; 43 ; 45 ; 64) fournissant les règles aux un ou plusieurs véhicules,
les un ou plusieurs véhicules confirmant les règles pour les actions suivantes des un ou plusieurs véhicules en fournissant leur consensus vis-à-vis de ces règles à l'unité en bordure de route (13 ; 32 ; 43 ; 45 ; 64),
l'unité en bordure de route (13 ; 32 ; 43 ; 45 ; 64) stockant ce consensus sous forme de contrats intelligents (15a-b ; 35) dans le grand livre distribué (16 ; 36 ; 43 ; 46 ; 102).

2. Dispositif électronique (13 ; 32 ; 43 ; 46 ; 64 ; 900 ; 101) selon la revendication 1, dans lequel la permission d'accéder au grand livre distribué (16 ; 36 ; 43 ; 46 ; 102) dépend de la proximité physique.

3. Dispositif électronique (13 ; 32 ; 43 ; 46 ; 64 ; 900 ; 101) selon la revendication 2, dans lequel la proximité physique est vérifiée par chacun des membres d'un grand livre distribué.

4. Dispositif électronique (13 ; 32 ; 43 ; 46 ; 64 ; 900 ; 101) selon la revendication 1, le dispositif électronique (13 ; 32 ; 43 ; 46 ; 64 ; 900 ; 101) étant agencé en outre pour contribuer à différents grands livres à mesure qu'il passe d'une localisation à une autre.

5. Dispositif électronique (13 ; 32 ; 43 ; 46 ; 64 ; 900 ; 101) selon la revendication 1, dans lequel le grand livre distribué (16 ; 36 ; 43 ; 46 ; 102) est conçu comme une chaîne de blocs.

6. Dispositif électronique (13 ; 32 ; 43 ; 46 ; 64 ; 900 ; 101) selon la revendication 1, dans lequel le grand livre distribué (16 ; 36 ; 43 ; 46 ; 102) est un grand livre distribué privé avec permissions pour une localisation.

7. Dispositif électronique (13 ; 32 ; 43 ; 46 ; 64 ; 900 ; 101) selon la revendication 1, dans lequel le grand livre distribué stocke des données de communication de véhicules,
dans lequel les données de communication de véhicules stockées par le grand livre distribué (16 ; 36 ; 43 ; 46 ; 102) comprennent des informations de consensus.

8. Dispositif électronique (13 ; 32 ; 43 ; 46 ; 64 ; 900 ; 101) selon la revendication 1, dans lequel un contrat intelligent (15a-b ; 35) définit une règle élémentaire pour le comportement d'un groupe de véhicules dans une zone définie.

9. Dispositif électronique (13 ; 32 ; 43 ; 46 ; 64 ; 900 ; 101) selon la revendication 1, dans lequel le grand livre distribué (16 ; 36 ; 43 ; 46 ; 102) enregistre des informations géographiques, des résultats de consensus précédents et/ou un retour d'information sur l'exécution d'un contrat intelligent (15a-b ; 35).

10. Dispositif électronique (13 ; 32 ; 43 ; 46 ; 64 ; 900 ; 101) selon la revendication 1, dans lequel un contrat intelligent (15a-b ; 35) stipule un code d'ordinateur qui est utilisé pour vérifier si le comportement de véhicules dans un groupe de véhicules satisfait à des actions stipulées dans un contrat intelligent (15a-b ; 35).

11. Système comprenant des nœuds qui sont configurés comme des hôtes d'un grand livre distribué (16 ; 36 ; 43 ; 46 ; 102), la permission d'accéder au grand livre distribué (16 ; 36 ; 43 ; 46 ; 102) étant basée sur la localisation, au moins un nœud étant configuré comme un dispositif électronique (13 ; 32 ; 43 ; 46 ; 64 ; 900 ; 101) tel que défini dans l'une quelconque des revendications 1 à 10.

12. Procédé de fourniture d'un grand livre distribué (16 ; 36 ; 43 ; 46 ; 102), la permission d'accéder au grand livre distribué (16 ; 36 ; 43 ; 46 ; 102) étant basée sur la localisation,
un ou plusieurs véhicules étant assignés au grand livre distribué (16 ; 36 ; 43 ; 46 ; 102) sur la base de leur distance respective jusqu'à une unité en bordure de route (13 ; 32 ; 43 ; 45 ; 64) à laquelle le grand livre distribué (16 ; 36 ; 43 ; 46 ; 102) est intégré,
les un ou plusieurs véhicules fournissant des informations à l'unité en bordure de route (13 ; 32 ; 43 ; 45 ; 64) et
l'unité en bordure de route (13 ; 32 ; 43 ; 45 ; 64) déterminant des règles pour les actions suivantes des un ou plusieurs véhicules sur la base de ces informations,
l'unité en bordure de route (13 ; 32 ; 43 ; 45 ; 64) fournissant les règles aux un ou plusieurs véhicules,
les un ou plusieurs véhicules confirmant les règles pour les actions suivantes des un ou plusieurs véhicules en fournissant leur consensus vis-à-vis de ces règles à l'unité en bordure de route (13 ; 32 ; 43 ; 45 ; 64),
l'unité en bordure de route (13 ; 32 ; 43 ; 45 ; 64) stockant ce consensus sous forme de contrats intelligents (15a-b ; 35) dans le grand livre distribué (16 ; 36 ; 43 ; 46 ; 102).
